Europäisches Patentamt

European Patent Office

Office européen des brevets

(19)

(11) Veröffentlichungsnummer: **0 038 017
B1**

(12) EUROPÄISCHE PATENTSCHRIFT

(45) Veröffentlichungstag der Patentschrift:
07.09.83

(51) Int. Cl.³: **C 02 F 3/02**

(21) Anmeldenummer: 81102627.7

(22) Anmeldetag: 08.04.81

(54) Verfahren zur Abwasserbelüftung in Ausgleichs- und Speicherbecken.

(30) Priorität: 10.04.80 DE 3013881

(43) Veröffentlichungstag der Anmeldung:
21.10.81 Patentblatt 81/42

(45) Bekanntmachung des Hinweises auf die Patenterteilung:
07.09.83 Patentblatt 83/36

(84) Benannte Vertragsstaaten:
AT BE CH DE FR GB IT LI LU NL SE

(56) Entgegenhaltungen:
DE-A-2 326 224
DE-A-2 820 086

(73) Patentinhaber: SCHERING AKTIENGESELLSCHAFT
Berlin und Bergkamen, Waldstrasse 14 Postfach 1540,
D-4619 Bergkamen (DE)

(72) Erfinder: Stein, Theodor, Feuerbachstrasse 42,
D-4618 Kamen (DE)

Verfahren zur Abwasserbelüftung in Ausgleichs- und Speicherbecken

Die Erfindung betrifft ein Verfahren zur Belüftung von industriellen und gewerblichen Abwässern in Ausgleichs- und Speicherbecken.

Durch eine derartige Belüftung, die in Speicher- und Ausgleichsbecken durchgeführt wird, um Faulung zu verhindern, wird automatisch ein Abbau von etwa 10%, höchstens bis 20% erzielt. Bei hohem Sauerstoffeintrag fällt Überschußschlamm an, was wegen seiner kostenintensiven Beseitigung möglichst vermieden wird.

Es ist Aufgabe der Erfindung, ein Belüftungsverfahren anzugeben, das einen höheren Abbau der Schmutzfracht ohne Anfall von Überschußschlamm erlaubt.

Die Aufgabe wird dadurch gelöst, daß die Belüftung so eingestellt ist, daß die Bakterienpopulation dispers gehalten wird.

In Ausgestaltung der Erfindung ist vorgesehen, daß die Belüftung so eingestellt ist, daß das Redoxpotential im negativen Bereich, vorzugsweise im Bereich von −200 mV bis −500 mV, liegt.

Es wurde überraschend festgestellt, daß nach ausreichender Adaptionszeit auch bei stark verminderter Belüftung sich aus der üblichen Abwasserbakterien-Population eine Biozönose bildet, die in der Lage ist, bis zu 50% der vorhandenen organischen Abwasserinhaltsstoffe zu veratmen, wenn die Bakterienpopulation dispers gehalten wird und somit die sonst bei der biologischen Abwassereinigung üblicherweise einsetzende Bildung von Bakterienflocken und damit Schlammanfall vermieden wird. Die Vermehrung pathogener Stämme war dabei nicht zu beobachten.

Weiterhin wurde überraschend festgestellt, daß bei den Verfahrensbedingungen die Sauerstoffübertragungswerte deutlich ansteigen. Mit einer handelsüblichen selbstansaugenden Belüftungseinrichtung, deren Sauerstoffübertragungsleistung, gemessen in Reinwasser (4 m Wassertiefe) bei einer Stromaufnahme von 18 kW, mit 20 kg $O_2$/h angegeben wird, wurden unter Verfahrensbedingungen bei gleicher Stromaufnahme Leistungen von etwa 40 kg $O_2$/h bei durchschnittlich 3 m Wassertiefe erzielt.

Da die aus einem nach dem erfindungsgemäßen Verfahren belüfteten Becken an eine nachgeschaltete biologische Anlage abgegebenen organischen Frachten durch den Teilabbau erheblich vermindert sind, wird der dort wesentlich kostenaufwendigere Eintrag von Sauerstoff reduziert und der Anfall an Überschußschlamm vermindert, dessen Beseitigung bekanntlich 65 bis 75% der Kosten einer konventionellen Belebungsanlage ausmacht.

Der bei dem erfindungsgemäßen Verfahren für die Mischpopulation optimale pH-Wert von ca. 7 wird von der Biomasse überraschenderweise selbst eingestellt, selbst dann, wenn die pH-Werte im zulaufenden Abwasser, gegebenenfalls nach Neutralisation, in einem Bereich von ca. 4 bis 11 im Verlaufe des Tages, im Tagesdurchschnitt zwischen 5 und 8 schwanken.

Das erfindungsgemäße Verfahren eignet sich demnach in besonderem Maße auch für die Belüftung von Abwässern, deren pH-Wert stark schwankt.

Nach der bereits erwähnten Adaptionszeit mit verminderter Belüftung in der Anlaufphase wird bei kontinuierlichem Betrieb das Redoxpotential auf einem möglichst konstanten Wert in dem Bereich von −200 bis −500 mV, vorzugsweise −200 bis −300 mV, gehalten. Die Konstanthaltung wird dabei umso wichtiger, je näher das Redoxpotential bei −200 mV liegt. (Das Redoxpotential wird hier in Werten angegeben, die mit einer Einstabmeßkette der Fa. Ingold, Pt − 4825 − 60, gemessen werden.)

Die Konzentration an Bakterien ist dabei gering, ca. 200 − 300 mg/l. Auch die Neubildung an Biomasse ist sehr gering; sie liegt bei nur etwa 0,23 kg Biomasse pro Kilogramm abgebautem CSB.

In weiterer Ausgestaltung der Erfindung ist vorgesehen, daß man die Belüftung in Abhängigkeit von der Abweichung des gemessenen Redoxpotentials vom Sollwert steuert.

Zweckmäßig bedient man sich dabei eines Prozeßrechners, dem ein Sollwert des Redoxpotentials vorgegeben wird, von dem ausgehend er eine Zu- oder Abschaltung von Lüftern steuert. Dabei wird dem Prozeßrechner ständig der aktuelle Wert des Redoxpotentials eingegeben. Überdies werden die Belüftungseinrichtungen zweckmäßig, wenn sie nicht voll in Betrieb sind, in einem vorgegebenen Zeittakt so umgeschaltet, daß alle Teile des Beckens in regelmäßigen Abständen voll durchmischt werden.

In weiterer Ausgestaltung der Erfindung erfolgt, falls erforderlich, die Zugabe an Minimumstoff, bei Abwässern der Industrie meistens Phosphat, in solchen Mengen, daß die nach der Verdünnungsrate entstehenden Verluste an Biomasse ausgeglichen werden. Dabei wird in weiterer Ausgestaltung der Erfindung die Zugabe in Abhängigkeit vom Redoxpotential und/ oder der Laufzeit der Belüfter geregelt, wobei man sich vorteilhaft wieder des Prozeßrechners bedient.

Die Regelung kann dabei so erfolgen, daß die Bakterienkonzentration durch Verminderung der Minimumstoffe herabgesetzt wird, wenn das Redoxpotential trotz voller Inanspruchnahme der Belüftungseinrichtung unter den angestrebten Sollwert sinkt.

Die Zugabe an Minimumstoff ist dagegen zu erhöhen, wenn bei Einhaltung des angestrebten Redoxpotentials die Intensität der Belüftung zu stark absinkt.

Redoxpotential, Intensität der Belüftung, Minimumstoffzugabe und Konzentration an Biomasse sind also sich gegenseitig beeinflussende Größen, was in der Regelung entsprechend berücksichtigt wird. Das Redoxpotential ist in dem erfindungsgemäßen Verfahren die übergeordnete Regelgröße.

## Patentansprüche

1. Verfahren zur Belüftung von industriellen und gewerblichen Abwässern in Ausgleichs- und Speicherbecken, dadurch gekennzeichnet, daß die Belüftung so eingestellt wird, daß die Bakterienpopulation dispers ist.

2. Verfahren nach Anspruch 1, dadurch gekennzeichnet, daß die Belüftung so eingestellt ist, daß das Redoxpotential im negativen Bereich liegt.

3. Verfahren nach Anspruch 1 oder 2, dadurch gekennzeichnet, daß das Redoxpotential im Bereich von −200 bis −500 mV liegt.

4. Verfahren nach einem der Ansprüche 1 bis 3, dadurch gekennzeichnet, daß man die Belüftung in Abhängigkeit von der Abweichung des gemessenen Redoxpotential vom Sollwert steuert.

5. Verfahren nach einem der Ansprüche 1−4, dadurch gekennzeichnet, daß man den für das Wachstum der Biomasse erforderlichen Minimumstoff dem Abwasser in solchen Mengen zusetzt, daß die nach der Verdünnungsrate entstehenden Verluste an Biomasse ausgeglichen werden.

6. Verfahren nach einem der Ansprüche 1−5, dadurch gekennzeichnet, daß man die Zugabe des Minimumstoffes in Abhängigkeit von der Abweichung des Redoxpotentials vom Sollwert und/oder von der Intensität der Belüftung steuert.

## Claims

1. Process for aerating industrial and commercial waste water in neutralising and storage tanks, characterised in that the aeration is adjusted in such a manner that the bacteria population is disperse.

2. Process according to claim 1, characterised in that the aeration is adjusted in such a manner that the redox potential is in the negative range.

3. Process according to claim 1 or 2, characterised in that the redox potential is in the range of from −200 to −500 mV.

4. Process according to any one of claims 1 to 3, characterised in that the aeration is controlled as a function of the deviation of the measured redox potential from the desired value.

5. Process according to any one of claims 1 to 4, characterised in that the minimum material required for the growth of the biomass is added to the waste water in such amounts that the losses of biomass occurring according to the rate fo dilution are compensated for.

6. Process according to any one of claims 1 to 5, characterised in that the addition of the minimum material is controlled as a function of the deviation of the redox potential from the desired value and/or of the intensity of the aeration.

## Revendications

1. Procédé d'aération d'eaux usées industrielles et artisanales dans des bassins de compensation et de stockage, procédé caractérisé en ce qu'on règle l'aération de manière que la population bactérienne soit dispersée.

2. Procédé selon la revendication 1, caractérisé en ce qu'on règle l'aération de manière que le potentiel Redox se situe dans un domaine négatif.

3. Procédé selon la revendication 1 ou 2, caractérisé en ce que le potentiel Redox se situe entre −200 et −500 mV.

4. Procédé selon l'une quelconque des revendications 1 à 3, caractérisé en ce qu'on règle l'aération en fonction de l'écart entre le potentiel Redox mesuré et la valeur de consigne.

5. Procédé selon l'une quelconque des revendications 1 à 4, caractérisé en ce qu'on ajoute à l'eau usée la substance minimale nécessaire pour la croissance de la biomasse, cela en des quantités telles que compensées les pertes en biomasse résultant de la dilution.

6. Procédé selon l'une quelconque des revendications 1 à 5, caractérisé en ce qu'on règle l'addition de la substance minimale en fonction de l'écart entre le potentiel Redox et la valeur de consigne et/ou en fonction de l'intensité de l'aération.